# EUROPÄISCHE PATENTANMELDUNG

(11) **EP 2 314 556 A2**
(43) Veröffentlichungstag der Anmeldung: **27.04.2011**
(21) Anmeldenummer: 10176730.9
(22) Anmeldetag: 15.09.2010
(51) Int. Cl.: C04B 26/04, C04B 26/16, C04B 26/18, C04B 40/06

(54) **Zweikomponenten-Mörtelmasse und ihre Verwendung**

(30) Priorität: 30.09.2009 DE 102009043792
(71) Anmelder: HILTI Aktiengesellschaft, 9494 Schaan (LI)
(72) Erfinder: Bürgel, Thomaas, 86899, Landsberg am Lech (DE)

(57) **Zusammenfassung**

Beschrieben wird eine Zweikomponenten-Mörtelmasse mit einer härtbaren Harz komponente (A) und einer davon reaktionsinhibierend getrennt angeordneten Här terkomponente (B), die in der Harzkomponente (A) eine Reaktivverdünner-Mischung enthält, die mindestens ein Hydroxyalkyl(meth)acrylat, mindestens ein Alkyl (meth)acrylat und mindestens eine Acetoacetato-Verbindung der allgemeinen Forme (I) umfasst, sowie die Verwendung dieser Zweikomponenten-Mörtelmasse zur Befestigung von Verankerungsmitteln in Bohrlöchern in mineralischen Untergründer durch chemische Reaktion der Harzkomponente (A) mit der Härterkomponente (B).

## Beschreibung

Gegenstand der vorliegenden Erfindung ist eine Zweikomponenten-Mörtelmasse mit einer durch ein Redoxinitiatorsystem härtbaren Harzkomponente (A), die 5 bis 30 Gew.-% mindestens eines radikalisch polymerisierbaren Harzes, 3 bis 45 Gew.-% einer Reaktivverdünner-Mischung, 30 bis 75 Gew.-% Füllstoffe und 1 bis 8 Gew.-% Verdickungsmittel enthält, und einer davon reaktionsinhibierend getrennt angeordneten Härterkomponente (B), die 1 bis 20 Gew.-% eines Peroxids als eine Komponente eines Redoxinitiatorsystems, 1 bis 25 Gew.-% Polymerteilchen aus 99,9 bis 70 Gew.-% eines durch wässrige Emulsionspolymerisation hergestellten Polymerisats oder Polymerisatgemischs, 0,1 bis 30 Gew.-% eines Beschleunigers als zweite Komponente des Redoxinitiatorsystems, der überwiegend in den Polymerteilchen kovalent gebunden oder in den Polymerteilchen verkapselt vorliegt, 10 bis 35 Gew.- % Wasser, 40 bis 80 Gew.-% Füllstoffe und 0,5 bis 5 Gew.-% Verdickungsmittel enthält, mit der Maßgabe, dass die Summe der Mengen der Bestandteile der Harzkomponente bzw. der Härterkomponente jeweils 100 Gew.-% beträgt, und deren Verwendung zur Befestigung von Verankerungsmitteln in Bohrlöchern in mineralischen Untergründen durch chemische Reaktion.

Chemische Mörtelmassen und Dübelmassen auf der Basis von radikalisch härtenden Reaktionsharzen sind seit langem bekannt. Diese Reaktionsharze setzen sich in der Regel aus einer härtbaren Harzkomponente und einer Härterkomponente zusammen. Die Harzkomponente umfasst beispielsweise ein radikalisch polymerisierbares Harz, einen Beschleuniger als Teil des Redoxinitiatorsystems sowie Füllstoffe und übliche Zusätze, wie Verdickungsmittel. Die reaktionsinhibierend getrennt von der Harzkomponente angeordnete Härterkomponente umfasst beispielsweise ein Peroxid als zweiten Teil des Redoxinitiatorsystems sowie ebenfalls Füllstoffe und übliche Zusätze, wie Verdickungsmittel, Farbstoffe und dergleichen.

Bei der Anwendung einer solchen Zweikomponenten-Mörtelmasse wird die Harzkomponente mit der Härterkomponente vermischt, in das Bohrloch in einem mineralischen Untergrund beispielsweise aus Beton eingebracht, wonach das Verankerungsmittel in das mit der Mörtelmasse befüllte Bohrloch eingeführt und justiert wird, wonach die Mörtelmasse aushärtet. Solche chemischen Mörtelmassen sind vielfältig aus dem Stand der Technik bekannt.

So beschreibt die DE 32 26 602 A1 eine härtbare Zweikomponenten-Mörtelmasse, die ein ungesättigtes Polyesterharz, einen Reaktivverdünner, Füllstoffe, Thixotro piermittel und einen radikalischen Härtungskatalysator enthält.

Gegenstand der DE 36 17 702 A1 ist ein härtbares Mittel zur Befestigung von Dübeln und Ankerstangen mit einem Gehalt an härtbarem Acrylat, welches neben einem organischen Peroxidhärter, einem Beschleuniger, einem Phlegmatisierungsmittel, mineralischen Füllstoffen und Thixotropiermittel einen Reaktivverdünner enthält.

Die DE 39 40 309 A1 beschreibt ebenfalls eine Mörtelmasse zur Befestigung von Verankerungsmitteln in festen Aufnahmewerkstoffen, mit einem Gehalt an radikalisch härtbaren Vinylesterurethanharzen und einem Reaktivverdünner als Wahlkomponente.

Die DE 42 31 161 A1 offenbart ebenfalls einen Zweikomponenten-Mörtel zur Befestigung von Verankerungsmitteln in Bohrlöchern mit einem Gehalt an hydraulisch abbindenden und/oder polykondensierbaren Verbindungen als anorganische, härtbare Verbindungen und härtbaren Vinylestern als organische, härtbare Verbindungen.

Aus der DE 195 31 649 A1 ist eine Dübelmasse zur chemischen Befestigung von Ankerstangen, Gewindehülsen und Schrauben in Bohrlöchern bekannt, welche ein Reaktionsharz und - räumlich getrennt davon angeordnet - ein Härtungsmittel für das Harz enthält. Da die Aufgabe dieses Standes der Technik darin besteht, einen Inhibitor bereitzustellen, der bei luftdichten Verpackungen auch in Gegenwart von Licht eine ausreichend lange Lagerstabilität gewährleistet, ist das wesentliche Merkmal dieser Dübelmasse die Anwesenheit eines Piperidinyl-N-oxyls oder eines Tetrahydropyrrol-N-Oxyls als Inhibitor. Das Reaktionsharz umfasst mindestens 20 Gew.-% eines Vinylester- oder Vinylesterurethan-Harzes und kann als Comonomer einen Methacrylsäureester enthalten.

Schließlich wird in der DE 41 31 457 A1 eine Zweikomponenten-Mörtelmasse zur chemischen Befestigung von Ankerstangen, Dübeln und Schrauben in Bohrlöchern beschrieben, welche ein radikalisch härbares Vinylester- oder Vinylurethanharz und räumlich getrennt davon ein Härtungsmittel für das Harz enthält sowie als Comonomer ein Acetacetoxyalkyl(meth)acrylat, welches dazu dient, eine gute Haftung an silikatischen Materialien zu erzielen.

Aus der DE 10 2004 035 567 B4 ist eine Zweikomponenten-Mörtelmasse bekannt die in der härtbaren Harzkomponente eine Reaktivverdünner-Mischung enthält, die aus mindestens einem Hydroxyalkyl(meth)acrylat und mindestens einem Acetaceto xyalkyl(meth)acrylat in einem bestimmten Gewichtsverhältnis besteht. Mit dieser Reaktivverdünner-Mischung wird erreicht, dass die Mörtelmasse sowohl auf Beton untergründen als auch auf Ziegeluntergründen eine Haftung zeigt, die deutlich bes ser ist als diejenige von Zweikomponenten-Mörtelmassen, die durch die Auswahl ih res Reaktivverdünners für den Einsatz in Beton bzw. für den Einsatz in Ziegelun tergründen optimiert worden sind.

Die DE 103 39 329 A1 beschreibt Monomer-Polymer-Systeme mit steuerbarer Topf zeit. Bei der Anwendung der in Rede stehenden Zweikomponenten-Mörtelmassen ist es von Interesse, die Topfzeit, d. h. die nach dem Vermischen der Harzkomponente mit der Härterkomponente der Zweikomponenten-Mörtelmasse für die Verarbeitung zur Verfügung stehende Zeit zu variieren und an den vorliegenden Arbeitsprozess anzupassen. Nach der Lehre dieses Standes der Technik wird es möglich, diese Topfzeit innerhalb weiter Grenzen einzustellen, und zwar dadurch, dass man eine Komponente des Redoxinitiatorsystems an den Teilchen eines durch wässrige Emul sionspolymerisation hergestellten Polymerisats oder Polymerisatgemisches anordnet oder an solchen Polymerteilchen absorbiert.

Die DE 10 2007 032 836 A1 offenbart eine weitere Ausgestaltung dieser technischen Lehre, gemäß der diese Polymerteilchen aus einem Emulsionspolymerisabestehen, das einen bestimmten Aktivator enthält, der über kovalente Bindungen ir das Emulsionspolymerisat eingebaut ist. Bei diesem Aktivator handelt es sich um (Meth)acryloyl-funktionalisierte Aminabkömmlinge, wie N-((Meth)acryloyl(poly)oxy-alkyl)-N-alkyl-(o,m,p)-(mono,di,tri,tetra,penta)-alkylanilin, N-((Meth)-acryloyl(poly)-oxyalkyl)-N-(arylalkyl)-(o,m,p)-(mono,di,tri,tetra,penta)-alkylanilin, N-((Meth)acryloyl)poly)oxyalkyl)-N-alkyl-(o,m,p)-(mono,di,tri,tetra,penta usw.)-alkylnaphtylamin, N-((Meth)acrylamidoalkyl)-N-alkyl-(o,m,p)-(mono,di,tri,tetra,penta)-alkylanilin. Beispiele für weitere Amine sind N,N-Dimethylaminoethyl(meth)acrylat, Diethylaminoethyl(meth)acrylat, 3-Dimethylamino-2,2-dimethylpropyl(meth)acrylat, tert,-Butylaminoethyl(meth)acrylat, N-Vinylimidazol und Dimethylaminopropyl(meth)acrylamid Bevorzugt werden N-((Meth)acryloyloxyethyl)-N-methylanilin, N-((Meth)acryloyloxy-propyl)-N-methylanilin, N-((Meth)acryloyloxypropyl)-N-methyl-(o,m,p)-toluidin, N-((Meth)acryloyloxyethyl)-N-methyl-(o,m,p)-toluidin, N-((Meth)acryloylpolyoxyethyl)-N-methyl-(o,m,p)-toluidin. Dabei ist es möglich, diese Substanzen einzeln oder in Mischung von zwei oder mehreren einzusetzen. Mit Hilfe dieser polymerfixierten Aktivatoren bzw. Beschleuniger wird es möglich, Zweikomponenten-Mörtelmassen mit langen Gelzeiten zu bilden.

Hier und im Folgenden steht die angewandte Schreibeweise (Meth)acrylat dafür, dass es sich bei diesen Verbindungen sowohl um die Methacrylate als auch um die Acrylate handeln kann, also beispielsweise Methylmethacrylat bzw. Methylacrylat.

Dabei wird die wässrige Dispersion des an die Polymerteilchen gebundenen Beschleunigers der ebenfalls wässrigen Härterkomponente zugesetzt. Beim Vermischen dieser Härterkomponente mit der Harzkomponente quellen die in der Harzkomponente enthaltenen Reaktivverdünner das Beschleunigerpolymer, sodass der Beschleuniger freigesetzt wird und die Vernetzung des Mörtels einsetzt. Es hat sich bei der Untersuchung dieser Technologie in realen Injektionsmörtel gezeigt, dass Gelzeiten von mindestens 24 Stunden bei 0°C und Versagenslasten erreicht werden, die lediglich 50 % des heute üblichen Niveaus erreichen. Die Aushärtung bei tiefen Temperaturen war dabei nur sehr eingeschränkt möglich.

Durch Variation der Konzentration eines Hydroxyalkylmethacrylats, wie Hydroxyethylmethacrylat oder Hydroxypropylmethacrylat lässt sich die Gelzeit zwar einstellen. Es werden jedoch Werte deutlich unter 30 Minuten nicht erreicht und auch die Tieftemperaturaushärtung blieb unbefriedigend.

Die Verwendung sehr polarer Monomerer, wie Acetoacetatoethylmethacrylat, oder der Einsatz besonders gut lösender Reaktivverdünner, wie Methylmethacrylat oder Tetrahydrofurfurylmethacrylat, führte nicht zu einer Verkürzung der Gelzeit.

Die Aufgabe der vorliegenden Erfindung besteht nun darin, eine Zweikomponenten-Mörtelmasse der eingangs angegebenen Art zu schaffen, die eine variable Topfzeit aufweist, die unterhalb des Bereichs liegt, der nach dem diskutierten Stand der Technik möglich ist, und welche Mörtelmasse auch bei tiefen Temperaturen, beispielsweise bei 0 °C, ohne Verlust der Versagenslast aushärtet.

Es wurde nun überraschenderweise gefunden, dass es mit einer Reaktivverdünner-Mischung, die eine Kombination aus drei bestimmten Monomeren umfasst, möglich wird, Gelzeiten im Bereich von 10 bis 15 Minuten bei 25 °C zu erreichen und gleichzeitig auch eine Anwendung auch bei 0 °C zu ermöglichen, wobei Versagenslasten erreicht werden, die das für die Anwendung erforderliche Maß erreichen.

Gegenstand der vorliegenden Erfindung ist daher die Zweikomponenten-Mörtelmasse gemäß Hauptanspruch. Die Unteransprüche betreffen bevorzugte Ausführungsformen dieser Zweikomponenten-Mörtelmasse und ihre Verwendung zur Befestigung von Verankerungsmitteln in Bohrlöchern in mineralischen Untergründen durch chemische Reaktion der Harzkomponente mit der Härterkomponente.

Die Erfindung betrifft daher eine Zweikomponenten-Mörtelmasse mit einer durch ein Redoxinitiatorsystem härtbaren Harzkomponente (A), die 5 bis 30 Gew.-% mindestens eines radikalisch polymerisierbaren Harzes, 3 bis 45 Gew.-% einer Reaktivverdünner-Mischung, 30 bis 75 Gew.-% Füllstoffe und 1 bis 8 Gew.-% Verdickungsmittel enthält, und einer davon reaktionsinhibierend getrennt angeordneten Härterkomponente (B), die 1 bis 20 Gew.-% eines Peroxids als eine Komponente eines Redoxinitiatorsystems, 1 bis 25 Gew.-% Polymerteilchen aus 99,9 bis 70 Gew.-% eines durch wässrige Emulsionspolymerisation hergestellten Polymerisats oder Polymerisatgemischs, 0,1 bis 30 Gew.-% eines Beschleunigers als zweite Komponente des Redoxinitiatorsystems, der überwiegend in den Polymerteilchen kovalent gebunden oder in den Polymerteilchen verkapselt vorliegt, 10 bis 35 Gew.-% Wasser, 40 bis 80 Gew.-% Füllstoffe und 0,5 bis 5 Gew.-% Verdickungsmittel enthält, mit der Maßgabe, dass die Summe der Mengen der Bestandteile der Harzkomponente bzw. der Härterkomponente jeweils 100 Gew.-% beträgt, die dadurch gekennzeichnet ist, dass die Reaktivverdünner-Mischung mindestens ein Hydroxyalkyl(meth)acrylat, mindestens ein Alkyl(meth)acrylat und mindestens eine Acetoacetato-Verbindung der allgemeinen Formel (I) umfasst: 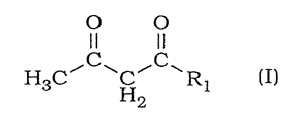 in der R₁ Wasserstoff, eine C₁-C₆-Alkylgruppe oder eine Gruppe -OR₂ bedeutet, worin R₂ eine C₁-C₆-Alkylgruppe, eine Gruppe der Formel (II): 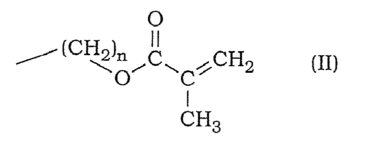 oder eine Gruppe der Formel (III): 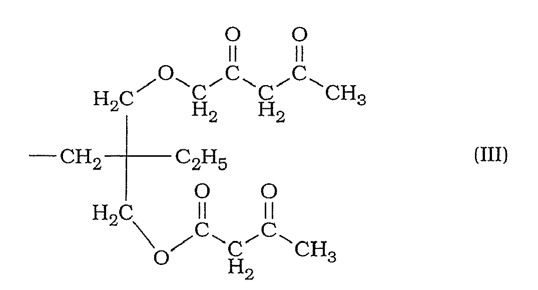 und n eine ganze Zahl mit einem Wert von 1 bis 6 einschließlich bedeuten.

Gemäß einer bevorzugten Ausführungsform enthält die Reaktivverdünner-Mischung der Harzkomponente (A) als Hydroxyalkyl(meth)acrylat Hydroxyethylmethacrylat, Hydroxypropylmethacrylat und/oder Hydroxybutylmethacrylat, als Alkyl(meth)acrylat Methylmethacrylat und/oder Ethylmethacrylat und als Acetoacetato-Verbindung der allgemeinen Formel (I) Acetylaceton, Acetoacetatoethylmethacrylat und/ oder Triacetoacetatotrimethylolpropan.

Vorzugsweise umfasst die Harzkomponente (A) als radikalisch polymerisierbares Harz mindestens einen Vertreter der ungesättigte Polyesterharze, Vinylesterharze, wie zum Beispiel Epoxyacrylate, vorzugsweise durch Addition von (Meth)acrylsäure an Epoxidharze hergestellte Epoxyacrylate, und ethoxylierte Bisphenol-(meth)acrylate wie sie in der EP 0 534 201 offenbart sind, und Vinylesterurethanharze umfassenden Gruppe. Als Vinylesterurethanharze sind Urethanmethacrylatharze und/ oder Urethandimethacrylatharze bevorzugt, während als ungesättigte Polyesterharze insbesondere ungesättigte Polyesterharze auf Basis von o- und/oder iso-Phthalsäure, Maleinsäure oder Fumarsäure als Dicarbonsäure und niedrigmolekularen aliphatischen Polyolen, vorzugsweise Diolen, bevorzugt sind.

Gemäß einer weiteren bevorzugten Ausführungsform der Erfindung enthält die Harzkomponente (A) zusätzlich 0 bis 30 Gew.-% eines eine oder zwei Acrylatgruppen aufweisenden zusätzlichen Reaktiwerdünners, wie beispielsweise Tetrahydrofurfurylmethacrylat, Isobornylmethacrylat, Butandioldimethacrylat, Ethylenglykoldimethacrylat, Hexandioldimethacrylat, Polyethylenglykolmethacrylat, Polyethylenglykoldimethacrylat, Diethylenglykoldimethacrylat und/oder Triethylenglykoldimethacrylat.

Gemäß einer weiter bevorzugten Ausführungsform der Erfindung enthält die Harz komponente (A) 0 bis 1 Gew.-% eines Polymerisationsinhibitors, wie einen phenolischen oder frei-radikalischen Polymerisationsinhibitor, vorzugsweise 4-Hydroxy 3,5-di-tert.-butyltoluol, Butylbrenzcatechin, Hydrochinon und/oder 2,2,6,6-Tetra methylpiperidinyl-1-oxid oder dessen Derivate.

Die Härterkomponente (B) enthält als Beschleuniger vorzugsweise ein tertiäres aromatisches Amin, ein Toluidin oder Xylidin und/oder ein Kobalt-, Mangan-, Zinn- oder Cersalz. Die Härterkomponente (B) kann an den Polymerteilchen verkapselt als Beschleuniger N,N-Dimethylanilin, N,N-Diethylanilin, N,N-Dimethyl-p-toluidin, N,N-Bis(hydroxyethyl)-p-toluidin, N,N-Bis(hydroxypropyl)-p-toluidin, N,N-Bis(hydroxyethyl)-m-toluidin, N-Bis(2-hydroxyethyl)-xylidin, Cobaltoctoat und/oder Cobaltnaphthenat enthalten.

In besonders bevorzugter Weise enthält die Härterkomponente (B) als Polymerteilchen Teilchen eines Emulsionspolymerisats, das erhältlich ist nach der in der DE 10 2007 032 836 A1 beschriebenen Verfahrensweise durch wässrige Emulsionspolymerisation einer Mischung aufweisend:
a) 5 bis 99,9 Gew.-% eines oder einer Mehrzahl von Monomeren mit einer Wasserlöslichkeit < 2 Gew.-% bei 20 °C ausgewählt aus der Gruppe bestehend aus monofunktionellen (Meth)acrylatmonomeren, Styrol und Vinylestern;
b) 0 bis 70 Gew.-% eines oder einer Mehrzahl mit den Monomeren a) copolymerisierbaren Monomeren;
c) 0 bis 20 Gew.-% einer oder einer Mehrzahl zweifach oder mehrfach vinylisch ungesättigter Verbindungen;
d) 0 bis 20 Gew.-% einer oder einer Mehrzahl polarer Monomere mit einer Wasserlöslichkeit > 2 Gew.-% bei 20°C; und
e) 0,1 bis 95 Gew.-% wenigstens eines Beschleunigers, der über kovalente Bindungen in das Emulsionspolymerisat eingebaut ist und der Formel (IV) entspricht: 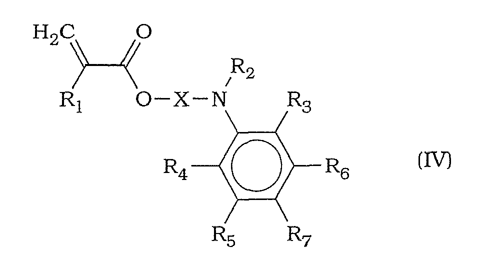
worin
- R₁ Wasserstoff oder Methyl bedeutet;
- X eine lineare oder verzweigte Alkandiylgruppe mit 1 bis 18 Kohlenstoffato men bedeutet, die ein oder mehrfach mit Hydroxylgruppen und/oder mit C₁ C₄ Alkoxygruppen substituiert sein kann;
- R₂ Wasserstoff oder einen linearen oder verzweigten Alkylrest mit 1 bis 12 Kohlenstoffatomen bedeutet, der gegebenenfalls ein oder mehrfach mit Hydroxylgruppen oder C₁-C₄-Alkoxygruppen substituiert ist, wobei die Hydroxyl gruppen partiell mit (Meth)acrylsäure verestert sein können;
- R₃, R₄, R₅, R₆ und R₇ unabhängig voneinander Wasserstoff oder eine lineare oder verzweigte Alkyl- oder Alkoxygruppe mit 1 bis 8 Kohlenstoffatomen be deuten, die ein oder mehrfach mit Hydroxylgruppen substituiert sein können und wobei gegebenenfalls zwei der Reste R₃ bis R₇ miteinander zu einem fünf bis siebengliedrigen Ring verbunden sind und gegebenenfalls ein kondensiertes aromatisches Ringsystem mit dem Phenylrest bilden, wobei die Komponenten a) bis e) zusammen 100 Gew.-% der polymerisierbaren Bestandteile der Mischung ergeben.

Bei der erfindungsgemäßen Zweikomponenten-Mörtelmasse können sowohl die Harzkomponente (A) als auch die Härterkomponente (B) oder auch beide Komponenten als Füllstoffe Quarz, Quarzmehl, pyrogene Kieselsäure, Zement, Glas, Silikate Alumosilikate, Aluminiumoxid, Korund, Porzellan, Steingut, Schwerspat, Leichtspat, Talkum und/oder Kreide enthalten.

Als Verdickungsmittel können sowohl die Harzkomponente (A) als auch die Härterkomponente (B) oder aber auch beide Komponenten Schichtsilikate, wie Bentonit oder Smektit, pyrogene Kieselsäure und/oder organische Substanzen, wie Amidwachse, Harnstoffderivate oder Rizinusölderivate enthalten.

Die Härterkomponente (B) enthält vorzugsweise als Peroxid Dibenzoylperoxid, Methylethylketonperoxid, tert.-Butylperbenzoat, Cyclohexanonperoxid, Lauroylperoxid, Cumolhydroperoxid und/oder tert.-Butylperoxy-2-ethylhexanoat .

Gegenstand der Erfindung ist weiterhin die Verwendung der oben beschriebenen Zweikomponenten-Mörtelmasse zur Befestigung von Verankerungsmitteln, wie Ankerstangen oder dergleichen, in mineralischen Untergründen, wie Beton, Ziegel, Naturstein oder dergleichen durch chemische Reaktion der Harzkomponente (A) mit der Härterkomponente (B).

Die folgenden Vergleichsbeispiele und Beispiele dienen der weiteren Erläuterung der Erfindung.

### Vergleichsbeispiele 1 und 2 und Beispiele 1 bis 3

Man bereitet zunächst durch Vermischen der in der nachfolgenden Tabelle I angegebenen Bestandteile die Harzkomponenten (A) der Vergleichsbeispiele 1 und 2 sowie der Beispiele 1 bis 3 gemäß der vorliegenden Erfindung.

**Tabelle I**

| **Harzkomponente (A)** | **Vergleich 1 (Gew.-%)** | **Vergleich 2 (Gew.-%)** | **Beispiel 1 (Gew.-%)** | **Beispiel 2 (Gew.-%)** | **Beispiel 3 (Gew.-%)** |
|---|---|---|---|---|---|
| Sartomer SR 348L* | 24 | 24 | 24 | | * |
| Urethanmethacrylatharz | | | | 15 | 15 |
| Hexandioldimethacrylat | 6,495 | 8,995 | 3,995 | 7,995 | 12,995 |
| Hydroxyethylmethacrylat | 12,5 | 12,5 | 12,5 | | |
| Hydroxypropylmethacrylat | | | | 10 | 5 |
| Methylmeth-acrylat | 5 | | 5 | 4 | 4 |
| Acetoacetatoethylmethacrylat | | 2,5 | 2,5 | | |
| Triacetoacetatotrimethylolpropan | | | | 3 | 3 |
| Butylhydroxytoluol | 0,005 | 0,005 | 0,005 | 0,005 | 0,005 |
| Kieselsäure | 3 | 3 | 3 | 2 | 2 |
| Korund | | | | 35 | 35 |
| Quarzsand | 29 | 29 | 29 | | |
| Kaolin | | | | 5 | 5 |
| Zement | 20 | 20 | 20 | 18 | 18 |
| **Summe** | 100 | 100 | 100 | 100 | 100 |

| | | | | | |
|---|---|---|---|---|---|
| Sartomer SR 348L = ethoxyliertes (2) Bisphenol-A-dimethacrylat | | | | | |

Getrennt davon bereitet man aus den in der Tabelle II angegebenen Bestandteiler die Härterkomponenten (B) der Vergleichsbeispiele 1 und 2 sowie der Beispiele 1 bis 3.

**Tabelle II**

| **Härterkomponente (B)** | **Vergleich 1 (Gew.-%)** | **Vergleich 2 (Gew.-%)** | **Beispiel 1 (Gew.-%)** | **Beispiel 2 (Gew.-%)** | **Beispiel 3 (Gew.-%)** |
|---|---|---|---|---|---|
| 40 % Benzoylperoxid in H₂O | 15 | 15 | 15 | 20 | 20 |
| Polymerdispersion* 50 % Polymerisat in H₂O | 18,5 | 18,5 | 18,5 | 18,5 | 18,5 |
| Quarzmehl | 63,5 | 63,5 | 63,5 | 40 | 40 |
| Aluminiumoxid | | | | 20 | 20 |
| Kieselsäure | 3 | 3 | 3 | | |
| Bentonit | | | | 1,5 | 1,5 |
| **Summe** | 100 | 100 | 100 | 100 | 100 |

| | | | | | |
|---|---|---|---|---|---|
| * gemäß DE 10 2007 032 836 A1 | | | | | |

Dabei handelt es sich bei der Polymerdispersion um Polymerteilchen eines Emulsionspolymerisats, das erhältlich ist durch die oben beschriebene wässrige Emulsionspolymerisation, wie es genauer in der DE 10 2007 032 836 A1 beschrieben ist.

Für die Untersuchung der Eigenschaften dieser Zweikomponenten-Mörtelmasse werden jeweils die Harzkomponente (A) mit der Härterkomponente (B) der Vergleichsbeispiele 1 und 2 bzw. der Beispiele 1 bis 3 in einem Volumenverhältnis von 3 : 1 vermischt. Die Mischung wird in Bohrlöcher in Beton eingebracht und es werden Gewindestangen der Abmessungen M12 mit einer Länge von 72 mm in die Bohrlöcher eingebracht und bei 25 °C bzw. 0 °C aushärten gelassen. Dabei wird die Gelzeit in der nachfolgend beschriebenen Weise bestimmt und die Versagenslast wie folgt gemessen.

### Bestimmung der Gelzeit

Die Zweikomponenten-Mörtelmasse bestehend aus der Harzkomponente (A) und der Härterkomponente (B) werden mit Hilfe eines statischen Mischers vermischt, in eir Reagenzglas eingefüllt und in eine Vorrichtung eingespannt, die einen Stempel ir der Mörtelmasse bewegt, solange das aufgrund der Konsistenz der Mörtelmasse möglich ist. Das Erstarren der Mörtelmasse wird festgestellt und entspricht dem Ende der Verarbeitungszeit. Die Zeit bis zum Erstarren wird erfasst und als Gelzeit bezeichnet.

### Messung der Versagenslast

Zur Bestimmung der Versagenslast wird in mineralischem Untergrund, hier in Beton, mittels eines Bohrhammers ein Bohrloch erstellt. Durch Ausblasen und Reinigung mittels passender Stahlbürste wird das Bohrloch gereinigt und es wird die aus der Harzkomponente (A) und der Härterkomponente (B) bestehende Zweikomponenten-Mörtelmasse nach dem Hindurchführen durch einen statischen Mischer vermischt in das Bohrloch mit einem Bohrlochdurchmesser von 14 mm und einer Bohrtiefe von 72 mm eingebracht. Eine Ankerstange M12 geeigneter Stahlfestigkeit wird sofort in die noch nicht ausgehärtete Masse gesetzt und es wird eine ausreichende Zeit (in Abhängigkeit von der Reaktivität zwischen 2 und 24 Stunden) abgewartet. Nach der Aushärtung der Mörtelmasse wird die Ankerstange durch zentrischen Zug unter Messung der Auszugskraft aus dem Beton herausgezogen.

Die mit diesen Untersuchungen erhaltenen Ergebnisse sind in der nachfolgenden Tabelle III zusammengestellt.

**Tabelle III**

| Mischung (A)/(B) 3 : 1(Vol./Vol.) | **Vergleich 1** | **Vergleich 2** | **Beispiel 1** | **Beispiel 2** | **Beispiel 3** |
|---|---|---|---|---|---|
| Gelzeit bei 25 °C | 17:10 min | 16:00 min | 12:00 min | 10:30 min | 18:50 min |
| Gelzeit bei 0 °C | keine Härtung | 28 h | 5:30 h | 3:40 min | 12 h |
| | | | | | |
| Versagenslast im Setzversuch bei 10 °C (kN) | - | 26,9 | 56,8 | 67,6 | 53,0 |

Wie aus der obigen Tabelle hervorgeht, werden nur mit den erfindungsgemäßen Mörtelmassen gemäß den Beispielen 1 bis 3 kurze Gelzeiten bei 25 °C und bei 0 °C erreicht, ohne dass damit eine Verringerung der Versagenslast einhergeht. Wie aus den Vergleichsbeispielen 1 und 2 zu erkennen ist, ergibt sich dann, wenn einer de drei wesentlichen Bestandteile der Reaktivverdünner-Mischung fehlt, keine ausreichend kurze Gelzeit namentlich bei tiefen Temperaturen und die Mörtelmasse här tet entweder überhaupt nicht aus oder zeigt eine Halbierung der Versagenslast.

Dieses Verhalten der Zweikomponenten-Mörtelmasse bei der erfindungsgemäßen Anwendung einer Reaktivverdünner-Mischung, die mindestens ein Hydroxy alkyl(meth)acrylat, mindestens ein Alkyl(meth)acrylat und mindestens eine Acetoa cetato-Verbindung der angegebenen allgemeinen Formel enthält, in keiner Weise er wartet werden.

## Patentansprüche

1. Zweikomponenten-Mörtelmasse mit einer durch ein Redoxinitiatorsystem härtbaren Harzkomponente (A), die 5 bis 30 Gew.-% mindestens eines radikalisch polymerisierbaren Harzes, 3 bis 45 Gew.-% einer Reaktivverdünner-Mischung, 30 bis 75 Gew.-% Füllstoffe und 1 bis 8 Gew.-% Verdickungsmittel enthält,
und einer davon reaktionsinhibierend getrennt angeordneten Härterkomponente (B), die 1 bis 20 Gew.-% eines Peroxids als eine Komponente eines Redoxinitiatorsystems, 1 bis 25 Gew.-% Polymerteilchen aus 99,9 bis 70 Gew.-% eines durch wässrige Emulsionspolymerisation hergestellten Polymerisats oder Polymerisatgemischs, 0,1 bis 30 Gew.-% eines Beschleunigers als zweite Komponente des Redoxinitiatorsystems, der überwiegend in den Polymerteilchen kovalent gebunden oder in den Polymerteilchen verkapselt vorliegt, 10 bis 35 Gew.-% Wasser, 40 bis 80 Gew.- % Füllstoffe und 0,5 bis 5 Gew.-% Verdickungsmittel enthält, mit der Maßgabe, dass die Summe der Mengen der Bestandteile der Harzkomponente bzw. der Härterkomponente jeweils 100 Gew.-% beträgt, **dadurch gekennzeichnet, dass** die Reaktivverdünner-Mischung mindestens ein Hydroxyalkyl(meth)acrylat, mindestens ein Alkyl-(meth)acrylat und mindestens eine Acetoacetato-Verbindung der allgemeinen Formel (I) umfasst: 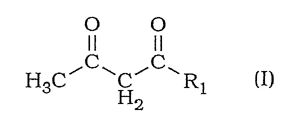 in der R₁ Wasserstoff, eine C₁-C₆-Alkylgruppe oder eine Gruppe -OR₂ bedeutet, worin
R₂ eine C₁-C₆-Alkylgruppe, eine Gruppe der Formel (II): 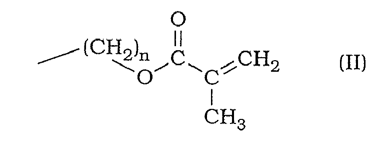 oder eine Gruppe der Formel (III): 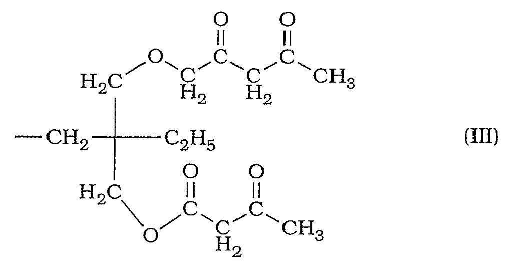 und n eine ganze Zahl mit einem Wert von 1 bis 6 einschließlich bedeuten.

2. Zweikomponenten-Mörtelmasse nach Anspruch 1, **dadurch gekennzeichnet, dass** die Reaktivverdünner-Mischung als Hydroxyalkyl(meth)acrylat Hydroxyethylmethacrylat, Hydroxypropylmethacrylat und/oder Hydroxybutylmethacrylat, als Alkyl(meth)acrylat Methylmethacrylat und/oder Ethylmethacrylat und als Acetoacetato-Verbindung der allgemeinen Formel (I) Acetylaceton, Acetoacetatoethylmethacrylat und/oder Triacetoacetatotrimethylolpropan umfasst.

3. Zweikomponenten-Mörtelmasse nach Anspruch 1 oder 2, **dadurch gekennzeichnet, dass** die Harzkomponente (A) als radikalisch polymerisierbares Harz mindesten einen Vertreter der ungesättigte Polyesterharze, Vinylesterharze und Vinylesterurethanharze umfassenden Gruppe enthält.

4. Zweikomponenten-Mörtelmasse nach Anspruch 3, **dadurch gekennzeichnet, dass** die Harzkomponente (A) als Vinylesterurethanharz ein Urethanmethacrylatharz und/oder ein Urethandimethacrylatharz und/oder als ungesättigtes Polyesterharz ein ungesättigtes Polyesterharz auf Basis von o- und/oder iso-Phthalsäure, Maleinsäure oder Fumarsäure als Dicarbonsäure und niedrigmolekularen aliphatischen Polyolen, vorzugsweise Diolen enthält.

5. Zweikomponenten-Mörtelmasse nach einem der Ansprüche 1 bis 4, **dadurch gekennzeichnet, dass** die Harzkomponente (A) zusätzlich 0 bis 30 Gew.-% eines eine oder zwei Acrylatgruppen aufweisenden zusätzlichen Reaktiwerdünners enthält.

6. Zweikomponenten-Mörtelmasse nach Anspruch 5, **dadurch gekennzeichnet, dass** die Harzkomponente (A) als zusätzlichen Reaktivverdünner Tetrahydrofurfurylmethacrylat, Isobornylmethacrylat, Butandioldimethacrylat, Ethylenglykoldimethacrylat, Hexandioldimethacrylat, Polyethylenglykolmethacrylat, Polyethylenglykoldi methacrylat, Diethylenglykoldimethacrylat und/oder Triethylenglykoldimethacryla enthält.

7. Zweikomponenten-Mörtelmasse nach mindestens einem der Ansprüche 1 bis 6 **dadurch gekennzeichnet, dass** die Harzkomponente (A) 0 bis 1 Gew.-% eines Poly merisationsinhibitors enthält.

8. Zweikomponenten-Mörtelmasse nach Anspruch 7, **dadurch gekennzeichnet dass** die Harzkomponente (A) als Polymerisationsinhibitor einen phenolischen oder frei-radikalischen Polymerisationsinhibitor, vorzugsweise 4-Hydroxy-3,5-di-tert.-bu tyltoluol, Butylbrenzcatechin, Hydrochinon und/oder 2,2,6,6-Tetramethylpiperi dinyl-1-oxid oder dessen Derivate enthält.

9. Zweikomponenten-Mörtelmasse nach mindestens einem der Ansprüche 1 bis 8 **dadurch gekennzeichnet, dass** die Härterkomponente (B) als Beschleuniger eir tertiäres aromatisches Amin, ein Toluidin oder Xylidin und/oder ein Co-, Mn-, Sn oder Ce-Salz enthält.

10. Zweikomponenten-Mörtelmasse nach Anspruch 9, **dadurch gekennzeichnet dass** die Härterkomponente (B) in den Polymerteilchen verkapselt als Beschleunigen N,N-Dimethylanilin, N,N-Diethylanilin, N,N-Dimethyl-p-toluidin, N,N-Bis(hydroxyethyl)-p-toluidin, N,N-Bis(hydroxypropyl)-p-toluidin, N,N-Bis(hydroxyethyl)-m-toluidin, N-Bis(2-hydroxyethyl)-xylidin, Cobaltoctoat und/oder Cobaltnaphthenat enthält.

11. Zweikomponenten-Mörtelmasse nach mindestens einem der Ansprüche 1 bis 10, **dadurch gekennzeichnet, dass** die Härterkomponente (B) als Polymerteilcher Teilchen eines Emulsionspolymerisats enthält, das erhältlich ist durch wässrige Emulsionspolymerisation einer Mischung aufweisend:
a) 5 bis 99,9 Gew.-% eines oder einer Mehrzahl von Monomeren mit einer Wasserlöslichkeit < 2 Gew.-% bei 20 °C ausgewählt aus der Gruppe bestehend aus monofunktionellen (Meth)acrylatmonomeren, Styrol und Vinylestern;
b) 0 bis 70 Gew.-% eines oder einer Mehrzahl mit den Monomeren a) copolymerisierbaren Monomeren;
c) 0 bis 20 Gew.-% einer oder einer Mehrzahl zweifach oder mehrfach vinylisch ungesättigter Verbindungen;
d) 0 bis 20 Gew.-% einer oder einer Mehrzahl polarer Monomere mit einer Wasserlöslichkeit > 2 Gew.-% bei 20°C; und
e) 0,1 bis 95 Gew.-% wenigstens eines Beschleunigers, der über kovalente Bindungen in das Emulsionspolymerisat eingebaut ist und der Formel (IV) entspricht: 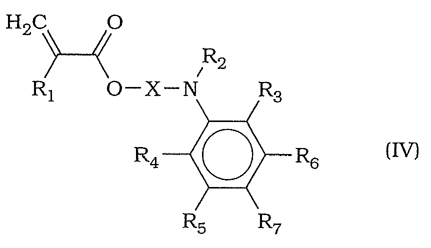 worin
- R₁ Wasserstoff oder Methyl bedeutet;
- X eine lineare oder verzweigte Alkandiylgruppe mit 1 bis 18 Kohlenstoffatomen bedeutet, die ein oder mehrfach mit Hydroxylgruppen und/oder mit C₁-C₄ Alkoxygruppen substituiert sein kann;
- R₂ Wasserstoff oder einen linearen oder verzweigten Alkylrest mit 1 bis 12 Kohlenstoffatomen bedeutet, der gegebenenfalls ein oder mehrfach mit Hydroxylgruppen oder C₁-C₄-Alkoxygruppen substituiert ist, wobei die Hydroxylgruppen partiell mit (Meth)acrylsäure verestert sein können;
- R₃, R₄, R₅, R₆ und R₇ unabhängig voneinander Wasserstoff oder eine lineare oder verzweigte Alkyl- oder Alkoxygruppe mit 1 bis 8 Kohlenstoffatomen bedeuten, die ein oder mehrfach mit Hydroxylgruppen substituiert sein können; und wobei gegebenenfalls zwei der Reste R₃ bis R₇ miteinander zu einem fünfbis siebengliedrigen Ring verbunden sind und gegebenenfalls ein kondensiertes aromatisches Ringsystem mit dem Phenylrest bilden, wobei die Komponenten a) bis e) zusammen 100 Gew.-% der polymerisierbaren Bestandteile der Mischung ergeben.

12. Zweikomponenten-Mörtelmasse nach mindestens einem der Ansprüche 1 bis 11, **dadurch gekennzeichnet, dass** die Harzkomponente (A) und/oder die Härterkomponente (B) Quarz, pyrogene Kieselsäure, Zement, Glas, Silikate, Alumosilikate, Aluminiumoxid, Korund, Porzellan, Steingut, Schwerspat, Leichtspat, Talkum und/ oder Kreide als Füllstoff enthalten.

13. Zweikomponenten-Mörtelmasse nach mindestens einem der Ansprüche 1 bis 12, **dadurch gekennzeichnet, dass** die Harzkomponente (A) und/oder die Härterkomponente (B) Schichtsilikate, wie Bentonit oder Smektit, pyrogene Kieselsäure und/oder organische Substanzen, wie Amidwachse, Harnstoffderivate oder Rizinusölderivate als Verdickungsmittel enthalten.

14. Zweikomponenten-Mörtelmasse nach mindestens einem der Ansprüche 1 bis 13, **dadurch gekennzeichnet, dass** die Härterkomponente (B) als Peroxid Dibenzoylperoxid, Methylethylketonperoxid, tert.-Butylperbenzoat, Cyclohexanonperoxid, Lauroylperoxid, Cumolhydroperoxid und/oder tert.-Butylperoxy-2-ethylhexanoat enthält.

15. Verwendung der Zweikomponenten-Mörtelmasse nach mindestens einem der vorhergehenden Ansprüche zur Befestigung von Verankerungsmitteln in Bohrlöchern in mineralischen Untergründen durch chemische Reaktion der Harzkomponente (A) mit der Härterkomponente (B).
